# EUROPEAN PATENT SPECIFICATION

(11) **EP 4 156 953 B1**
(45) Date of publication and mention of the grant of the patent: **16.09.2026**
(21) Application number: 21740632.1
(22) Date of filing: 25.05.2021
(51) Int. Cl.: A23D 7/00, A23D 9/02, C11C 3/04

(54) **INTERESTERIFIED PEQUI OIL AS ALTERNATIVE FAT**
INTERESTERIFIZIERTES POESQUI-ÖL ALS ALTERNATIVES FETT
HUILE DE PÉQUI INTERESTÉRIFIÉE EN TANT QU'ALTERNATIVE DE MATIÈRE GRASSE

(30) Priority: 29.05.2020 US 202063031891 P
(43) Date of publication of application: 05.04.2023
(73) Proprietor: Cargill, Incorporated, Wayzata, Minnesota 55391 (US)
(72) Inventor: PARKER, April Rae, Plymouth, Minnesota 55446 (US); ZACCARELLI DAVOLI, Fernanda, Golden Valley, Minnesota 55416 (US)
(74) Representative: Cargill IP Department
(86) International application number: PCT/US2021/033962
(87) International publication number: WO 2021/242712

(56) References cited:
- WO-A1-2010/053244
- US-A1- 2011 091 946
- DATABASE MEDLINE [online] US NATIONAL LIBRARY OF MEDICINE (NLM), BETHESDA, MD, US; 1 May 2017 (2017-05-01), GUEDES ANDRÉA MADALENA MACIEL ET AL: "Length-scale Specific Crystalline Structural Changes Induced by Molecular Randomization of Pequi Oil.", XP002804177, Database accession no. NLM28413191
- JOURNAL OF OLEO SCIENCE 01 MAY 2017, vol. 66, no. 5, 1 May 2017 (2017-05-01), pages 469 - 478, ISSN: 1347-3352
- DE FIGUEIREDO PATRÍCIA ROSANE LEITE ET AL: "Caryocar coriaceumWittm. (Pequi) fixed oil presents hypolipemic and anti-inflammatory effectsin vivoandin vitro", JOURNAL OF ETHNOPHARMACOLOGY, ELSEVIER IRELAND LTD, IE, vol. 191, 15 June 2016 (2016-06-15), pages 87 - 94, XP029748992, ISSN: 0378-8741, DOI: 10.1016/J.JEP.2016.06.038
- MARQUES CARDOSO CARLOS MAGNO ET AL: "Transesterification of Pequi (Caryocar brasiliensis Camb.) bio-oil via heterogeneous acid catalysis: Catalyst preparation, process optimization and kinetics", INDUSTRIAL CROPS AND PRODUCTS, ELSEVIER, NL, vol. 139, 27 June 2019 (2019-06-27), XP085775638, ISSN: 0926-6690, [retrieved on 20190627], DOI: 10.1016/J.INDCROP.2019.111485
- DATABASE MEDLINE [online] US NATIONAL LIBRARY OF MEDICINE (NLM), BETHESDA, MD, US; 1 May 2017 (2017-05-01), GUEDES ANDRÉA MADALENA MACIEL ET AL: "Length-scale Specific Crystalline Structural Changes Induced by Molecular Randomization of Pequi Oil.", XP002804182, Database accession no. NLM28413191
- JOURNAL OF OLEO SCIENCE 01 MAY 2017, vol. 66, no. 5, 1 May 2017 (2017-05-01), pages 469 - 478, ISSN: 1347-3352

## Description

### BACKGROUND

Fat plays an important and multi-functional role in bakery products. The fat imparts structure development, richness, and tenderness to the product, which improves the eating qualities of the products. For some products like cake and icing, the fat helps provide aeration. For Danish or puff pastry, fat can help provide for the development of flakiness in the product or for other products it can lubricate the gluten. Fat is extremely important in the creaming process (e.g., the combining of fat with other ingredients into a batter or dough) because it helps entrap air which leads to a leavening effect in cakes or a desired volume in icings. Liquid oil does not function the same way and cannot be used in all bakery products. The structure provided from a more solid fat is necessary to deliver on expected quality of bakery products. Andrea Madalena, et. al. (Length-scale Specific Crystalline Structural Changes Induced by Molecular Randomization of Pequi Oil, Journal of oleo science Japan 01 May 2017) describes chemical interesterification of pequi oil.

Various approaches have been developed to make bakery shortenings without using palm oil. One approach is the use of oleogels, which contains gelators (e.g., materials such as vegetable waxes, emulsifiers, polymers, or starch to add structure to liquid oil. Unfortunately, in general, oleogels lack functionality, are very difficult to be produced at large scale, and the materials used (gelators) are not label-friendly.

### SUMMARY OF THE INVENTION

In various aspects, the present invention provides a fat composition. The fat composition can be used in a food item. The composition includes interesterified pequi oil. The present invention is according to claims 1 to 12.

In various aspects, the present invention provides a filling for use in a biscuit or cookie. The filling includes interesterified pequi oil that is 15 wt% to 75 wt% of the filling. The filling also includes one or more sugars that are 40 wt% to 80 wt% of the filling. The filling is substantially free of palm oil.

In various aspects, the present invention provides an icing shortening for use in an icing. The icing shortening includes interesterified pequi oil that is 0.1 wt% to 99 wt% of the icing shortening. The icing shortening also includes one or more emulsifiers that are 0.01 wt% to 10 wt% of the icing shortening. The icing shortening is substantially free of palm oil

In various aspects, the present invention provides an all-purpose shortening. The all-purpose shortening includes interesterified pequi oil that is 0.1 wt% to 100 wt% of the all-purpose shortening. The all-purpose shortening also can includes one or more animal-based oils and/or plant-based oils other than interesterified pequi oil that are 1 wt% to 90 wt% of the all-purpose shortening. The all-purpose shortening is substantially free of palm oil.

In various aspects, the present invention provides a flaked fat. The flaked fat includes interesterified pequi oil that is 1 wt% to 80 wt% of the flaked fat. The flaked fat also can includes one or more animal-based oils and/or plant-based oils other than pequi oil that are 50 wt% to 90 wt% of the flaked fat. The flaked fat is substantially free of palm oil.

In various aspects, the present invention provides a food item including a composition including interesterified pequi oil.

In various aspects, the present invention provides a biscuit or cookie that may or may not include a filling. The biscuit or cookie includes interesterified pequi oil that is 2wt% to 40wt%. The filling includes interesterified pequi oil that is 15 wt% to 75 wt% of the filling. The filling also includes one or more sugars that are 40 wt% to 80 wt% of the filling. The filling is substantially free of palm oil

In various aspects, the present invention provides an icing or frosting including an icing shortening. The icing shortening includes interesterified pequi oil that is 0.1 wt% to 99 wt% of the icing shortening. The icing shortening also includes one or more emulsifiers that are 0.01 wt% to 10 wt% of the icing shortening. The icing shortening is substantially free of palm oil

In various aspects, the present invention provides a fried food item including an all-purpose shortening or frying fat. The all-purpose shortening or frying fat includes interesterified pequi oil that is 0.1 wt% to 100 wt% of the all-purpose shortening or frying fat. The all-purpose shortening or frying fat also can includes one or more animal-based oils and/or plant-based oils other than interesterified pequi oil that are 1 wt% to -90 wt% of the all-purpose shortening or frying fat. The all-purpose shortening or frying fat is substantially free of palm oil.

In various aspects, the present invention provides a method of making a food item using a fat composition including interesterified pequi oil. The method includes combining the interesterified pequi oil and other edible components to form the food item.

In various aspects, the present invention provides a method of making a fat composition. The method includes combining interesterified pequi oil and other edible components to form the fat composition.

In various aspects, the present invention provides a use of a fat composition including interesterified pequi oil to form a food item, or to partially or completely replace a fat in the food item.

The present invention provide certain advantages over other alternative fat composition and food items including the same. For example, there is a clear demand from the food industry to the oil and fat producers to develop alternatives for palm oil, especially for sustainability reasons. Often the composition or food item of the present invention is substantially free of palm oil, which is beneficial for sustainability purposes. In various aspects, the composition or food item of the present invention is substantially free of fully hydrogenated fats (e.g., fully hydrogenated fats having an iodine value of equal to or less than 4), which is beneficial for health purposes.

The mechanical properties and physical structure of a fat are responsible for its functionality and affect the quality of food items made therewith (e.g., bakery items, and other items). The fat composition of the present invention has properties and structure (e.g., properties and structure similar to palm oil-based fat products) such that it can be utilized as an alternative fat in a wide variety of food items, such as bakery items. The fat composition of the present invention provides a substantially palm oil-free composition that does not rely on the addition of synthesized additives (e.g., emulsifiers, waxes, and the like) or non-lipid materials (e.g., starch, protein, ethyl cellulose, and the like) to provide the properties and structure needed for functionality of the fat replacement and for the quality of food items made therewith. Preferably the fat composition of the present invention is an alternative fat to be used as bakery shortening or as a component of a bakery shortening that is not palm, not hydrogenated, is pure lipid-based.

### DETAILED DESCRIPTION OF THE INVENTION

While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or 0 wt% to 5 wt% but less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

### Alternative fat composition.

Various aspects of the present invention provide a fat composition. The composition can be used to partially or completely replace other fats in food items. The composition can provide the properties and structure needed to replace other fats in a wide variety of food items. The fat composition includes interesterified pequi oil.

Pequi oil is a vegetable oil, extracted from the Caryocar brasiliense, which is native to Brazil. The pequi oil used to produce the interesterified pequi oil can be any pequi oil, such as non-fractionated pequi oil, pequi oil from a first fractionation, pequi oil from a second fractionation, pequi oil from more than a second fractionation, pequi oil from one or more winterization fractionations, or a combination thereof.

Interesterification is a method of rearranging and redistributing the fatty acid on the glycerol fragment of an oil molecule. The rearrangement and redistribution does not change the overall composition of the fatty acids on the starting materials. Interesterification may be accomplished by chemical or enzymatic processes.

Chemical interesterification is a process by which fatty acids are randomly redistributed across the glycerol backbone of the triglyceride. This process is carried out by drying the starting material oil (e.g., a single oil or a blend of oils) and adding an interesterification catalyst, such as sodium methoxide, or another acid or base catalyst. When the reaction is complete, the catalyst is neutralized. The rearranged product can be washed, bleached, and deodorized. The rearranged product can have different physical-chemical properties than the starting material oil.

Enzymatic interesterification is another means by which oils and fats can be interesterified. This process uses most commonly, immobilized lipases to rearrange the fatty acids on the glycerol backbone of the triglyceride. There are immobilized lipases that can target fatty acids at specific positions on the glycerol backbone, therefore, the rearrangement of fatty acids during enzymatic interesterification can be less random than with chemical interesterification. After interesterification, the oil is deodorized to make finished oil products. Enzymatic interesterification has gained popularity over the last decades due to the flexibility of the process and reduced capital process input.

The interesterified pequi oil in the fat composition can be chemically interesterified pequi oil, enzymatically interesterified pequi oil, or a combination thereof. The interesterification can be performed to any suitable extent between the arrangement and distribution of the fatty acids in the starting materials versus the steady-state arrangement and distribution of the fatty acids obtained when the interesterification is allowed to run to substantial completion. In various aspects, the interesterified pequi oil in the fat composition is a chemically interesterified pequi oil that has been chemically interesterified to substantial completion at which point it has reached a relatively steady-state arrangement and distribution of the fatty acids on the glycerol units of the oil molecules.

Any suitable proportion of the fat composition can be the interesterified pequi oil, such as 0.01 wt% to 100 wt% of the composition is the interesterified pequi oil, 25 wt% to 99 wt%, or 0.01 wt% or more but less than or equal to 100 wt%, or 0.01 wt% to 100 wt% and less than, equal to, or greater than 0.05, 0.1, 0.2, 0.4, 0.6, 0.8, 1, 1.5, 2, 2.5, 3, 4, 5, 6, 8, 10, 12, 14, 16, 18, 20, 25, 30, 35, 40, 45, 50, 55, 60, 65, 70, 75, 80, 82, 84, 86, 88, 90, 92, 94, 95, 96, 97, 98, 99, 99.9 wt%, or 99.99 wt% or less of the composition is the interesterified pequi oil.

In various aspects, the composition includes non-interesterified pequi oil. The non-interesterified pequi oil can include any suitable non-interesterified pequi oil, such as non-fractionated pequi oil, pequi oil from a first fractionation, pequi oil from a second fractionation, pequi oil from more than a second fractionation, pequi oil from one or more winterization fractionations, or a combination thereof. The non-interesterified pequi oil can form any suitable proportion of the fat composition, such as 0.01 wt% to 99.99 wt%, or 0.01 wt% or more but less than or equal to 99.99 wt%, or 0.01 wt% to 99.99 wt% and less than, equal to, or greater than 0.05, 0.1, 0.2, 0.4, 0.6, 0.8, 1, 1.5, 2, 2.5, 3, 4, 5, 6, 8, 10, 12, 14, 16, 18, 20, 25, 30, 35, 40, 45, 50, 55, 60, 65, 70, 75, 80, 82, 84, 86, 88, 90, 92, 94, 95, 96, 97, 98, 99, 99.9 wt%, or 99.99 wt%. In various aspects, the composition is substantially free of non-interesterified pequi oil, such as including 0 wt% non-interesterified pequi oil, or less than 5 wt% non-interesterified pequi oil, or less than 4.5%, 4, 3.5, 3, 2.5, 2, 1.5, 1, 0.8, 0.6, 0.5, 0.4, 0.3, 0.2, 0.1, 0.05 wt%, or less than 0.01 wt% non-interesterified pequi oil.

The composition can be substantially free of palm oil, such as including a fraction thereof, a high oleic version thereof, a hydrogenated oil formed therefrom, an interesterified oil formed therefrom, or a combination thereof. For example, the composition can include 0 wt% palm oil, or less than 5 wt% palm oil, or less than 4.5%, 4, 3.5, 3, 2.5, 2, 1.5, 1, 0.8, 0.6, 0.5, 0.4, 0.3, 0.2, 0.1, 0.05 wt%, or less than 0.01 wt% palm oil.

The composition can be substantially free of fully hydrogenated oils. As used herein, a fully hydrogenated oil is an oil having an iodine value equal to or less than 4. For example, the composition can include 0 wt% fully hydrogenated oils, or less than 5 wt% fully hydrogenated oils, or less than 4.5%, 4, 3.5, 3, 2.5, 2, 1.5, 1, 0.8, 0.6, 0.5, 0.4, 0.3, 0.2, 0.1, 0.05 wt%, or less than 0.01 wt% fully hydrogenated oils.

The composition can be substantially free of emulsifiers, non-pequi waxes, non-lipid materials, starch, protein, cellulose, cellulose derivatives, plant-based oils other than interesterified pequi oil, or a combination thereof; for example, the composition can include 0 wt% of any one or more of these components, or less than 5 wt%, or less than 4.5%, 4, 3.5, 3, 2.5, 2, 1.5, 1, 0.8, 0.6, 0.5, 0.4, 0.3, 0.2, 0.1, 0.05 wt%, or less than 0.01 wt% of any one or more of these components.

In addition to the interesterified pequi oil, the fat composition can be substantially free of other materials, or the fat composition can include any one or more suitable components. For example, the fat composition can include an emulsifier, a wax (e.g., a non-pequi derived wax, or a pequi oil derived wax), a carbohydrate (e.g., starch), a protein, cellulose, a cellulose derivative (e.g., ethyl cellulose), a food coloring, a filler (e.g., fibers), a flavoring, a plant-based oil other than interesterified pequi oil, an animal-based oil (e.g., lard, tallow, milk fat, and the like), or a combination thereof. The fat composition can include an interesterified oil other than pequi oil (e.g., interesterified soybean oil), a fully hydrogenated oil (e.g., fully hydrogenated cottonseed oil or soybean), a polysorbate, a monoglyceride, a diglyceride, or a combination thereof.

In aspects of the composition that include one or more plant-based oils in addition to the interesterified pequi oil, the plant-based oil can be any suitable plant-based oil, such as coconut oil, corn oil, canola oil, cottonseed oil, pequi oil, olive oil, palm oil, peanut oil, rapeseed oil, safflower oil, sesame oil, soybean oil, sunflower oil, cocoa butter, shea butter, mango butter, a fraction thereof, a middle or high oleic version thereof, a low linolenic version thereof, a low saturated version thereof, a hydrogenated (e.g. partially or fully hydrogenated), oil formed therefrom, an interesterified oil formed therefrom, or a combination thereof. The one or more plant-based oils other than the interesterified pequi oil can form any suitable proportion of the composition, such as 0.01 wt% to 99.99 wt% of the composition, 10 wt% to 90 wt%, or 0.01 wt% or more but less than or equal to 99.99 wt%, or 0.01 wt% to 99.99 wt% and less than, equal to, or greater than 0.05, 0.1, 0.2, 0.4, 0.6, 0.8, 1, 1.5, 2, 2.5, 3, 4, 5, 6, 8, 10, 12, 14, 16, 18, 20, 25, 30, 35, 40, 45, 50, 55, 60, 65, 70, 75, 80, 82, 84, 86, 88, 90, 92, 94, 95, 96, 97, 98, 99, 99.9 wt%, or 99.99 wt%.

The fat composition can be any suitable composition for replacing fat used in a food item and/or for replacing fat used in preparing a food item. The composition is a shortening, an all-purpose shortening, an icing shortening, a filling fat, a flaked fat, a frying fat, a pumpable shortening, a cookie shortening, a cake shortening, a pastry shortening, a pie shortening, or a combination thereof.

The food item can be any suitable food item that includes the fat composition, such as a food item including the fat composition as a partial or complete replacement for another fat composition (e.g., a palm oil-based fat composition). The food item can include a fried food item, a bakery food item, a biscuit filling, an icing, a frosting, a confectionary item, a bonbon filling, an ice-cream coating, a chocolate or nut spreads, a margarine or spread (water in oil emulsion) or a combination thereof. The food item can include a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American biscuit, a chewing gum, a meat alternative, a dairy analog product (e.g., a non-dairy or reduced-dairy substitute product for a dairy product), or a combination thereof.

The alterative fat composition can be a biscuit filling (e.g., for a biscuit or a cookie). The interesterified pequi oil can be 15 wt% to 75 wt% of the biscuit filling, or 25 wt% to 60 wt%, or 15 wt% or more but less than or equal to 75 wt%, or 15 wt% to 75 wt% and less than, equal to, or greater than 20 wt%, 25, 30, 35, 40, 45, 50, 55, 60, 65, 70 wt%, or 75 wt%. The biscuit filling can include sugar; for example, sugar can be 40 wt% to 80 wt% of the biscuit filling, or 40 wt% or more but less than or equal to 80 wt%, or 40 wt% to 80 wt% and less than, equal to, or less than 45 wt%, 50, 55, 60, 65, 70, 75 wt%, or 80 wt%. The biscuit filling can include salt, vanilla, emulsifier, flavoring, coloring, cocoa powder, or a combination thereof.

The alterative fat composition can be an icing shortening (e.g., for forming an icing or frosting). The interesterified pequi oil can be 0.1 wt% to 99 wt% of icing shortening, or 40 wt% to 90 wt%, or 0.1 wt% or more but less than or equal to 99 wt%, or 0.1 wt% to 99 wt% and less than, equal to, or greater than 1 wt%, 2, 5, 10, 15, 20, 25, 30, 35, 40, 45, 50, 55, 60, 65, 70, 75, 80, 85, 90, 95, 96, 97, 98 wt%, or 99 wt%. The icing shortening can include one or more emulsifiers; for example, the one or more emulsifiers can be 0.01 wt% to 10 wt% of the composition, or 0.01 wt% or more but less than or equal to 10 wt%, or 0.01 wt% to 10 wt% and less than, equal to, or greater than 0.5 wt%, 1, 2, 4, 6, 8 wt%, or 10 wt%.

The alterative fat composition can be an all-purpose shortening. The interesterified pequi oil can be 0.1 wt% to 100 wt% of the all-purpose shortening, or 10 wt% to 100 wt%, or 0.1 wt% or more but less than or equal to 100 wt%, or 0.1 wt% to 100 wt% and less than, equal to, or greater than 1 wt%, 2, 4, 6, 8, 10, 15, 20, 25, 30, 35, 40, 45, 50, 55, 60, 65, 70, 75, 80, 85, 90, 95, 96, 97, 98, 99, 99.5, 99.9 wt%, or 100 wt%. The all-purpose shortening can include one or more animal-based oils and/or plant-based oils other than interesterified pequi oil, such as 1 wt% to 90 wt%, or 1 wt% or more but less than or equal to 90 wt%, or 1 wt% to 90 wt% and less than, equal to, or greater than 5 wt%, 10, 15, 20, 25, 30, 35, 40, 45, 50, 55, 60, 65, 70, 75, 80, 85 wt%, or 90 wt%. The all-purpose shortening can include an interesterified plant-based oil other than interesterified pequi oil, such as interesterified soybean oil. The all-purpose shortening can include a fully hydrogenated oil (e.g., an oil having an iodine value equal to or less than 4), such as a fully hydrogenated cottonseed oil or a fully hydrogenated soybean oil.

The alterative fat composition can be a flaked fat. The interesterified pequi oil can be 1wt% to 80 wt% of the flaked fat, or 10 wt% to 50 wt% of the flaked fat, or 1 wt% or more but less than or equal to 80 wt%, or 1 wt% to 80 wt% and less than, equal to, or greater than 5 wt%, 10, 15, 20, 25, 30, 35, 40, 45, 50, 55, 60, 65, 70, 75 wt%, or 80 wt%. The flaked fat can include one or more animal-based oils or plant-based oils other than pequi oil, such as 50 wt% to 90 wt% of the composition, or 50 wt% or more but less than or equal to 90 wt%, or 50 wt% to 90 wt% and less than, equal to, or greater than 55 wt%, 60, 65, 70, 75, 80, 85 wt%, or 90 wt%. The flaked fat can include a fully hydrogenated oil, such as a fully hydrogenated cottonseed oil or a fully hydrogenated soybean oil.

The interesterified pequi oil can have suitable properties for replacing other fats in food items or in the preparation of food items, such as providing appropriate structure (e.g., hardness) and/or other functionality to enable production of a food item of comparable or improved quality to a food item prepared from conventional or palm oil-based fats.

The interesterified pequi oil can have any suitable melting point, such as determined via AOCS method Cc18-80, such as 20 °C to 60 °C, 25 °C to 50 °C, or 20 °C or more but less than or equal to 60 °C, or 20 °C to 60 °C and less than, equal to, or greater than 21 °C, 22, 23, 24, 25, 26, 28, 30, 32, 34, 35, 36, 37, 38, 40, 41, 42, 43, 44, 46, 48, 50, 52, 54, 56, 58 °C, or 60 °C.

The interesterified pequi oil can have any suitable onset crystallization point as determined via DSC, such as 0 °C to 40 °C, 5 °C to 30 °C, or 0 °C or more but less than or equal to 40 °C, or 0 °C to 40 °C and less than, equal to, or greater than 5 °C, 10, 15, 20, 25, 30, 35 °C, or 40 °C.

Any suitable proportion of the interesterified pequi oil can be C16:0 fatty acid esters (i.e., proportion of the total fatty acids on glycerol units) that are C16:0 fatty acids, such as 20 wt% to 60 wt%, 35 wt% to 45 wt%, or 20 wt% or more but less than or equal to 60 wt%, or 20 wt% to 60 wt% and less than, equal to, or greater than 22 wt%, 24, 26, 28, 30, 32, 34, 36, 37, 38, 39, 40, 41, 42, 43, 44, 45, 46, 48, 50, 52, 54, 56, 58 wt%, or 60 wt%.

Any suitable proportion of the interesterified pequi oil can be C18:1 fatty acid esters, such as 35 wt% to 75 wt%, 50 wt% to 60 wt%, or 35 wt% or more but less than or equal to 75 wt%, or 35 wt% to 75 wt% and less than, equal to, or greater than 40, 45, 46, 48, 50, 51, 52, 53, 54, 55, 56, 57, 58, 59, 60, 62, 64, 66, 68, 70 wt%, or 75 wt%.

Any suitable proportion of the interesterified pequi oil can be saturated fatty acid esters, such as 25 wt% to 60 wt%, 35 wt% to 45 wt%, or 25 wt% or more but less than or equal to 60 wt%, or 25 wt% to 60 wt% and less than, equal to, or greater than 30 wt%, 35, 36, 37, 38, 39, 40, 41, 42, 43, 44, 45, 46, 47, 48, 49, 50, 55 wt%, or 60 wt%.

### Food item.

Various aspects of the present invention provide a food item including the fat composition including interesterified pequi oil. The food item can be any suitable food item that includes that alternative fat composition. For example, the food item can include a fried food item, a bakery food item, a biscuit filling, an icing, a frosting, a confectionary item, a bonbon filling, an ice-cream coating, a chocolate or nut spreads, a margarine or spread (water in oil emulsion) or a combination thereof. The food item can include a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American style biscuit, a chewing gum, a meat alternative, a dairy analog product (e.g., a non-dairy or reduced-dairy substitute product for a dairy product), or a combination thereof.

In various aspects, the food item can be substantially free of palm oil (e.g., both the fat composition and the remainder of the food item are substantially free of palm oil). In other aspects, the fat composition, the remainder of the food item, or a combination thereof, include at least some palm oil.

In various aspects, the food item can be substantially free of fully hydrogenated oils (e.g., both the fat composition and the remainder of the food item are substantially free of fully hydrogenated oils). Fully hydrogenated oils can have an iodine value of equal to or less than 4. In other aspects, the fat composition, the remainder of the food item, or a combination thereof, include at least some fully hydrogenated oil.

The food item can be a biscuit or cookie that may or may not include a filling. The biscuit or cookie includes interesterified pequi oil that is 2wt% to 40wt%. The filling can include interesterified pequi oil that is 15 wt% to 75 wt% of the filling, or 25 wt% to 60 wt%, or 15 wt% or more but less than or equal to 75 wt%, or 15 wt% to 75 wt% and less than, equal to, or greater than 20 wt%, 25, 30, 35, 40, 45, 50, 55, 60, 65, 70 wt%, or 75 wt%. The filling can also include one or more sugars that are 40 wt% to 80 wt% of the filling, or 40 wt% or more but less than or equal to 80 wt%, or 40 wt% to 80 wt% and less than, equal to, or greater than 45 wt%, 50, 55, 60, 65, 70, 75 wt%, or 80 wt%. The filling can be substantially free of palm oil. The filling can be substantially free of fully hydrogenated oil having an iodine value equal to or less than 4.

The food item can be an icing or frosting including an icing shortening. The icing shortening can include interesterified pequi oil that is 0.1 wt% to 99 wt% of the icing shortening, or 40 wt% to 90 wt%, or 0.1 wt% or more but less than or equal to 99 wt%, or 0.1 wt% to 99 wt% and less than, equal to, or greater than 1 wt%, 2, 5, 10, 15, 20, 25, 30, 35, 40, 45, 50, 55, 60, 65, 70, 75, 80, 85, 90, 95, 96, 97, 98 wt%, or 99 wt%. The icing shortening can include one or more emulsifiers that are 0.01 wt% to 10 wt% of the icing shortening, or 0.01 wt% or more but less than or equal to 10 wt%, or 0.01 wt% to 10 wt% and less than, equal to, or greater than 0.1 wt%, 0.5, 1, 2, 4, 6, 8 wt%, or 10 wt%. The icing shortening can be substantially free of palm oil. The icing shortening can be substantially free of fully hydrogenated oil having an iodine value equal to or less than 4.

The food item can be a fried food item including an all-purpose shortening or a frying fat. The food item can be prepared by frying the food item in the all-purpose shortening or frying fat. The all-purpose shortening or frying fat can include interesterified pequi oil that is 0.1 wt% to 100 wt% of the all-purpose shortening or frying fat, or 10 wt% to 100 wt%, or 0.1 wt% or more but less than or equal to 100 wt%, or 0.1 wt% to 100 wt% and less than, equal to, or greater than 1 wt%, 2, 4, 6, 8, 10, 15, 20, 25, 30, 35, 40, 45, 50, 55, 60, 65, 70, 75, 80, 85, 90, 95, 96, 97, 98, 99, 99.5, 99.9 wt%, or 100 wt%. The all-purpose shortening or frying fat can also include one or more animal-based oils and/or plant-based oils other than interesterified pequi oil that are 1 wt% to 90 wt% of the all-purpose shortening or frying fat, or 1 wt% or more but less than or equal to 09 wt%, or 1 wt% to 90 wt% and less than, equal to, or greater than 5 wt%, 10, 15, 20, 25, 30, 35, 40, 45, 50, 55, 60, 65, 70, 75, 80, 85 wt%, or 90 wt%. The all-purpose shortening or frying fat can be substantially free of palm oil.

### Method of making a food item.

Various aspects of the present invention provide a method of making a food item using the fat composition including interesterified pequi oil. The method can be any suitable method that forms a food item including the fat composition. The method can include combining the interesterified pequi oil and other edible components to form the food item. For example, the combining of the interesterified pequi oil and the other edible components can include frying the other components in the interesterified pequi oil, forming an icing, adding a filling to a biscuit or cookie, adding an icing to a bakery food item, or a combination thereof.

### Method of making the fat composition.

Various aspects of the present invention provide a method of making the fat composition including interesterified pequi oil. The method can be any suitable method that forms the fat composition. The method can include combining the interesterified pequi oil and other one or more edible components to form the fat composition.

The combining of the interesterified pequi oil and the other one or more edible component can be performed in any suitable way. The combining can include melting the interesterified pequi oil and blending the other edible components therewith. The combining can also include blending and further processing such as interesterification and/or hydrogenation and/or fractionation.

The method can further include crystallizing the mixture of the interesterified pequi oil and the other edible components. The method can further include mechanical working (e.g. kneading) the crystallized mixture of the interesterified pequi oil and the other edible components, to form the fat composition.

### Use of the fat composition.

Various aspects of the present invention provide a use of the fat composition including interesterified pequi oil. The use can be any suitable use, such as any suitable use that aligns with the methods of using the fat composition described herein. The use can be to partially or completely replace a fat in a food item, such as any food item described herein. The use can be to form a food item.

Among others at least some of the advantages of the composition of the present invention resides in the facts that it provide a viable non-palm alternative for biscuit (cookie) fillings. The thus produced biscuit filling has the right consistency such that it was soft enough so the top biscuit adheres to the filling but firm enough so that the filling does not squeeze out of the sandwich biscuit. It further provides a viable non-palm alternative for icing. It provides a viable non-palm alternative for icing. It provides a viable non-palm alternative for flaked fat.

### Exemplary Aspects of the Present Invention

A fat composition for use in a food item, the composition comprising:
interesterified pequi oil.

A fat composition for use in a food item the composition comprising:
interesterified pequi oil , wherein the interesterified pequi oil comprises interesterified unfractionated pequi oil, interesterified pequi oil from a first fractionation, interesterified pequi oil from a second fractionation, interesterified pequi oil from more than a second fractionation, interesterified pequi oil from one or more winterization fractionations, or a combination thereof.

A fat composition for use in a food item the composition comprising:
interesterified pequi oil, wherein the interesterified pequi oil comprises chemically interesterified pequi oil.

A fat composition for use in a food item the composition comprising:
interesterified pequi oil, wherein the interesterified pequi oil comprises enzymatically interesterified pequi oil.

A fat composition for use in a food item the composition comprising:
interesterified pequi oil, wherein the interesterified pequi oil is chemically interesterified to completion.

A fat composition for use in a food item the composition comprising:
interesterified pequi oil, wherein the composition is substantially free of palm oil.

It provides the fat composition of the present invention wherein the composition is substantially free of fully hydrogenated oils having an iodine value of equal to or less than 4.

It provides the composition as previously described, wherein the composition is substantially free of emulsifiers, non-pequi waxes, starch, protein, cellulose, cellulose derivatives, plant-based oils other than interesterified pequi oil, or a combination thereof.

It provides the composition as previously described, wherein about 0.01 wt% to 100 wt% of the composition is the interesterified pequi oil.

It provides the composition as previously described, wherein about 25 wt% to 99 wt% of the composition is the interesterified pequi oil.

It provides the composition as previously described, further comprising non-interesterified pequi oil.

Such a non-interesterified pequi oil comprises unfractionated pequi oil, pequi oil from a first fractionation, pequi oil from a second fractionation, pequi oil from more than a second fractionation, pequi oil from one or more winterization fractionations, or a combination thereof.

The non-interesterified pequi oil can be present in an amount of about 0.01 wt% to 99.99 wt% of the composition is the non-interesterified pequi oil.

It provides the composition as previously described, wherein the composition further comprises an emulsifier, a wax, a carbohydrate, a protein, cellulose, a cellulose derivative, a food coloring, a filler, a flavoring, a plant-based oil other than interesterified pequi oil, an animal-based oil, or a combination thereof.

It provides the composition as previously described, wherein the plant-based oil comprises coconut oil, corn oil, canola oil, cottonseed oil, pequi oil, olive oil, palm oil, peanut oil, rapeseed oil, safflower oil, sesame oil, soybean oil, sunflower oil, cocoa butter, shea butter, mango butter, a fraction thereof, a middle or high oleic version thereof, , a low linolenic version thereof, a low saturated version thereof, a hydrogenated (e.g. partially or fully hydrogenated), oil formed therefrom, an interesterified oil formed therefrom, or a combination thereof.

It provides the composition as previously described, wherein the one or more plant-based oils other than interesterified pequi oil are 0.01 wt% to 99.99 wt% of the composition.

It provides the composition as previously described wherein the one or more plant-based oils other than interesterified pequi oil are 10 wt% to 90 wt% of the composition.

It provides the composition as previously described, wherein the composition further comprises interesterified soybean oil, fully hydrogenated cottonseed oil, fully hydrogenated soybean, potassium sorbate, a polysorbate, a monoglyceride, a diglyceride, or a combination thereof.

It provides the composition as previously described, wherein the composition is a shortening, an all-purpose shortening, an icing shortening, a filling fat, a flaked fat, a frying fat, a pumpable shortening, or a combination thereof.

It provides the composition as previously described, wherein the composition is an icing shortening, an all-purpose shortening, a filling shortening, a pastry shortening, a pie shortening, a cookie shortening, a cake shortening or a flaked fat.

It provides the composition as previously described, wherein the food item comprises a fried food item, a bakery food item, a biscuit filling, an icing, a frosting, a confectionary item, or a combination thereof.

It provides the composition as previously described, wherein the food item comprises a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American style biscuit, a chewing gum, a meat alternative, a dairy analog product, or a combination thereof.

It provides the composition as previously described, wherein the composition is a biscuit filling, wherein 15 wt% to 75 wt% of the composition is the interesterified pequi oil.

It provides the biscuit filling as previously described, wherein 25 wt% to 60 wt% of the composition is the interesterified pequi oil.

It provides the biscuit filling as previously described, wherein 40 wt% to 80 wt% of the composition is sugar.

It provides the biscuit filling as previously described, wherein the composition comprises salt, vanilla, emulsifier, flavoring, coloring, cocoa powder, or a combination thereof.

It provides the composition as previously described, wherein the composition is an icing shortening, wherein 0.1 wt% to 99 wt% of the composition is the interesterified pequi oil

It provides the icing shortening as previously described, wherein 40 wt% to 90 wt% of the composition is the interesterified pequi oil.

It provides the icing shortening as previously described, wherein 0.01 wt% to 10 wt% of the composition is one or more emulsifiers.

It provides the composition as previously described, wherein the composition is an all-purpose shortening, wherein 0.1 wt% to 100 wt% of the composition is the interesterified pequi oil.

It provides the all-purpose shortening as previously described, wherein 10 wt% to 100 wt% of the composition is the interesterified pequi oil.

It provides the all-purpose shortening as previously described, wherein 1 wt% to 90 wt%, of the composition is one or more animal-based oils and/or plant-based oils other than interesterified pequi oil.

It provides the all-purpose shortening as previously described, wherein the composition comprises an interesterified plant-based oil other than interesterified pequi oil.

It provides the all-purpose shortening as previously described, wherein the composition comprises a fully hydrogenated oil.

It provides the composition as previously described, wherein the composition is a flaked fat, wherein 1wt% to 80 wt% of the composition is the interesterified pequi oil.

It provides the flaked fat as previously described, wherein 10 wt% to 50 wt% of the composition is the interesterified pequi oil.

It provides the flaked fat as previously described, wherein 50 wt% to 90 wt% of the composition is one or more animal-based oils or plant-based oils other than pequi oil.

It provides the flaked fat as previously described, wherein the composition comprises a fully hydrogenated oil.

It provides the composition as previously described, wherein the interesterified pequi oil has a melting point of as 20 °C to 60 °C,

It provides the composition as previously described, wherein the interesterified pequi oil has a melting point of 25 °C to 50 °C.

It provides the composition as previously described, wherein the interesterified pequi oil has an onset crystallization point of 0 °C to 40 °C.

It provides the composition as previously described, wherein the interesterified pequi oil has an onset crystallization point of 5 °C to 30 °C,

It provides the composition as previously described, wherein 20 wt% to 60 wt% of the interesterified pequi oil is C16:0 fatty acid esters.

It provides the composition as previously described, wherein 35 wt% to 45 wt% of the interesterified pequi oil is C16:0 fatty acid esters.

It provides the composition as previously described, wherein 35 wt% to 75 wt% of the interesterified pequi oil is C18:1 fatty acid esters.

It provides the composition as previously described, wherein 50 wt% to 60 wt% of the interesterified pequi oil is C18:1 fatty acid esters.

It provides the composition as previously described, wherein 25 wt% to 60 wt% of the interesterified pequi oil is saturated fatty acid esters.

It provides the composition as previously described, wherein 35 wt% to 45 wt% of the interesterified pequi oil is saturated fatty acid esters.

It provides a filling for use in a biscuit or cookie, the filling comprising:
interesterified pequi oil that is 15 wt% to 75 wt% of the filling; and
one or more sugars that are 40 wt% to 80 wt% of the filling;
wherein the filling is substantially free of palm oil and fully hydrogenated oil having an iodine value equal to or less than 4.

It provides an icing shortening for use in an icing, the icing shortening comprising:
interesterified pequi oil that is 0.1 wt% to 99 wt% of the icing shortening; and
one or more emulsifiers that are 0.01 wt% to 10 wt% of the icing shortening;
wherein the icing shortening is substantially free of palm oil and fully hydrogenated oil having an iodine value equal to or less than 4.

It provides an all-purpose shortening comprising:
interesterified pequi oil that is 0.1 wt% to 100 wt% of the all-purpose shortening; and
one or more animal-based oils and/or plant-based oils other than interesterified pequi oil that are 1 wt% to 90 wt% of the all-purpose shortening;
wherein the all-purpose shortening is substantially free of palm oil.

It provides a flaked fat comprising:
interesterified pequi oil that is 5 wt% to 70 wt% of the flaked fat; and
one or more animal-based oils or plant-based oils other than pequi oil that are 50 wt% to 90 wt% of the flaked fat;
wherein the flaked fat is substantially free of palm oil.

It provides a food item previously described, wherein the food item comprises a fried food item, a bakery food item, a biscuit filling, an icing, a frosting, a confectionary item, a bonbon filling, an ice-cream coating, a chocolate or nut spreads, a margarine or spread (water in oil emulsion) or a combination thereof.

It provides a food item previously described , wherein the food item comprises a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American biscuit, a chewing gum, a meat alternative, a dairy analog product, or a combination thereof.

It provides a food item previously described, wherein the food item is substantially free of palm oil.

It provides a food item previously described, wherein the food item is substantially free of fully hydrogenated oils.

It provides a biscuit or cookie comprising a filling, the filling comprising:
interesterified pequi oil that is 15 wt% to 75 wt% of the filling; and
one or more sugars that are 40 wt% to 80 wt% of the filling;
wherein the filling is substantially free of palm oil and fully hydrogenated oil having an iodine value equal to or less than 4.

It provides an icing or frosting comprising an icing shortening, the icing shortening comprising:
interesterified pequi oil that is 0.1 wt% to 99 wt% of the icing shortening; and
one or more emulsifiers that are 0.01 wt% to 10 wt% of the icing shortening;
wherein the icing shortening is substantially free of palm oil and fully hydrogenated oil having an iodine value equal to or less than 4.

It provides a fried food item comprising an all-purpose shortening or a frying fat, the all-purpose shortening or frying fat comprising:
interesterified pequi oil that is 0.1 wt% to 100 wt% of the all-purpose shortening or frying fat; and
one or more animal-based oils and/or plant-based oils other than interesterified pequi oil that are 1 wt% to 90 wt% of the all-purpose shortening or frying fat;
wherein the all-purpose shortening or frying fat is substantially free of palm oil.

It further provides a method of making a food item previously described, the filling previously described, the icing shortening previously described, the all-purpose shortening previously decsribed, or the flaked fat previously described, the method comprising:
combining the interesterified pequi oil and other edible components to form the food item.

It provides the previously described method, wherein combining of the interesterified pequi oil and the other edible components comprises frying the other components in the interesterified pequi oil, forming an icing, adding a filling to a biscuit or cookie, adding an icing to a bakery food item, or a combination thereof.

It further provides the method of making the composition previously described, the filling previously described, the icing shortening previously described, the all-purpose shortening previously described, or the flaked fat previously described, the method comprising:
combining the interesterified pequi oil and other edible components to form the composition previously described, the filling previously described, the icing shortening previously described, the all-purpose shortening previously described, or the flaked fat previously described.

It provides the method previously described, wherein the combining comprises melting the interesterified pequi oil and blending the other edible components therewith. The combining can also include blending and further processing such as interesterification and/or hydrogenation and/or fractionation.

It provides the method previously described, wherein the method further comprises crystallizing the mixture of the interesterified pequi oil and the other edible components.

It provides the method previously described, wherein the method further comprises kneading the crystallized mixture of the interesterified pequi oil and the other edible components.

It provides a use of the composition previously described, the filling previously described, the icing shortening previously described, the all-purpose shortening previously described, or the flaked fat previously described, comprising replacing fat in a food item.

It further provides a use of the composition previously described, the filling previously described, the icing shortening previously described, the all-purpose shortening previously described, or the flaked fat previously described, comprising forming a food item with the composition.

It provides the fat composition, foot item, method, or use of any one or any combination previously described optionally configured such that all elements or options recited are available to use or select from.

### Examples

Various aspects of the present invention can be better understood by reference to the following Examples which are offered by way of illustration. The present invention is not limited to the Examples given herein.

Chemically interesterified (IE) pequi oil was used in the Examples herein. The chemical interesterification process is described in detail as following. An unfractionated pequi oil was first dried (200 mbar, 110 °C, 30 min under agitation). Vacuum was broken to add the catalyst sodium methoxide (anhydrous). After the addition of the sodium methoxide (0.1% w/w), the reaction was started under vacuum (100 mbar) and continued during a period of 30 min. The vacuum was released and a 50% citric acid solution was added to inactivate the catalyst (5-10 min of agitation). The pequi oil was post bleached with 1.25% activated bleaching clay (Pure-Flo B80) (200 mbar, 110 °C, 30 min under agitation). The bleaching clay was removed by filtration over a preheated Buchner filter. After bleaching, the pequi oil was deodorized. Deodorization was completed by initially heating the material to 240°C under vacuum (<1 torr). Once target temperature was achieved, steam stripping via a heated water addition flask was conducted for 1 hour (5% water addition to generate steam for 1 hour). The water feed to the steam flask was then stopped and the material was cooled to 110°C under vacuum. After reaching target temperature, a nitrogen overlay was added as vacuum was released and interesterified pequi was pulled from the reactor flask.

Tables 1 and 2 show properties of the IE pequi oil, as well as of pequi oil. Table 1 shows solid fat content, melting point, fatty acid profile, and saturated fatty acid content, and Table 2 shows the crystallization and melting points of the material determined by differential scanning calorimetry (DSC). The melting points in Table 1 were determined by AOCS method Cc18-80, by determining the temperature at which a fat will sufficiently become fluid to flow under the conditions of the test. The solid fat content in Table 1 was determined by AOCS method Cd 16b-93 and the fatty acid profile was determined by AOCS method Ce 1h-05.

**Table 1. The solid fat content (SFC), melting point, fatty acid profile (FAP) and saturated fatty acid content of the pequi oil and interesterified pequi oil.**

| Analytical | Pequi oil (example 1) | Pequi oil (example 2) | IE pequi oil (example 1) | IE pequi oil (example 2) |
|---|---|---|---|---|
| SFC (%) at 10°C | 62.1 | 66.5 | 52.5 | 43.9 |
| SFC (%) at 20 °C | 20.2 | 18.5 | 27.3 | 20.4 |
| SFC (%) at 30°C | 0.0 | 0.1 | 10.3 | 8.1 |
| SFC (%) at 40°C | 0.0 | 0.1 | 3.9 | 2.3 |
| | | | | |
| Melting point, °C | 22.0 | 22.3 | 37.6 | 35.9 |
| | | | | |
| FAP, C12:0, % | 0.02 | 0.02 | 0.02 | 0.02 |
| FAP, C14:0, % | 0.08 | 0.08 | 0.07 | 0.07 |
| FAP, C16:0, % | 38.33 | 37.78 | 38.76 | 37.81 |
| FAP, C18:0, % | 2.02 | 2.06 | 1.99 | 2.06 |
| FAP, C18:1, % | 56.21 | 57.09 | 56.02 | 57.03 |
| FAP C18:2, % | 1.23 | 1.34 | 1.18 | 1.31 |
| FAP, C18:3, % | 0.38 | 0.23 | 0.47 | 0.29 |
| Saturated FA, % | 40.93 | 40.31 | 41.25 | 40.34 |

**Table 2. The crystallization and melting profiles of pequi oil and IE pequi oil determined by differential scanning calorimetry (DSC).**

| | Crystallization profile | | | | | Melting Profile | | |
|---|---|---|---|---|---|---|---|---|
| Material | Onset T (°C) | Peak 1 T (°C) | Peak 2 T (°C) | Peak 3 T (°C) | Enthalpy (J/g) | Peak 1 T (°C) | Peak 2 T (°C) | Enthalpy (J/g) |
| Pequi oil (example 1) | 5.26 | | -0.21 | -34.95 | 65.09 | | 19.55 | 76.72 |
| Pequi oil (example 2) | 8.16 | - | 3.66 | -35.07 | 79.45 | - | 22.33 | 82.79 |
| IE pequi oil (example 1) | 22.25 | 20.84 | 3.85 | -33.86 | 66.00 | 10.84 | 24.235 | 68.81 |
| IE pequi oil (example 2) | 21.64 | 20.37 | 1.97 | -35.12 | 74.51 | 7.25 | 23.08 | 77.84 |

### Example 1. Use of chemically interesterified pequi oil for biscuit fat filling.

Biscuit fat filling (for sandwich cookies) has to have a very specific solid content and crystallization behavior. Chemically interesterified pequi oil produces a viable non-palm alternative for biscuit (cookie) filling. Table 3 shows a biscuit fat filling composition formulated with IE pequi oil.

**Table 3. Biscuit filling formulation.**

| Ingredient | % |
|---|---|
| Powdered sugar (6X) | 59.55 |
| IE pequi oil | 40.00 |
| Salt | 0.20 |
| Vanilla | 0.25 |

The following procedure was used to form the biscuit filling. The IE pequi oil was melted and mixed with the other ingredients. The mixture was cooled by using a scrape surface heat exchanger to start the crystallization process. The biscuit filling was deposited on a biscuit (cookie). The interesterified pequi oil produced a viable non-palm alternative for biscuit (cookie) filling. The biscuit filling had the right consistency such that it was soft enough so the top biscuit adhered to the filling but firm enough so that the filling did not squeeze out of the sandwich biscuit.

### Example 2. Use of chemically interesterified pequi oil in icing shortening and icing preparation therefrom.

Based on the physical and chemical properties of the IE pequi oil, this fat can be used to make a fat system that is used in the creation of a cake, icing, or filling. Traditionally emulsifiers (such as mono and diglycerides or polysorbate 60) are used to help create cakes, icings, or fillings by reducing the surface tension when combining fat and water. Emulsifiers can help provide emulsion stability, aeration and foam stability, crystal modification or crumb softening. A shortening used for cakes, icings, or fillings can be created by the combination of IE pequi oil and emulsifiers or by combining IE pequi oil with other fats and emulsifiers. Table 4 shows a formulation of an icing shortening made with IE pequi oil.

**Table 4. Formulation of an icing shortening made with IE pequi oil.**

| Ingredient | % |
|---|---|
| Fat as chemically IE pequi oil | 95.9 |
| Mono/diglyceride having iodine value 50-57 | 3.5 |
| Polysorbate 60 | 0.6 |

The icing shortening was produced by melting the fat, combining the other ingredients, chilling, crystallization, mechanical working, such as kneading and packing. To crystallize the icing shortening, a scraped surface heat exchanger (SSHE) was used. Pin rotor machines or intermediate crystallizers were used in combination or individually to perform the mechanical working, which were employed in order to ensure homogeneity.

Icing shortenings are used to make icing or frosting. Icings and frostings can be used for cake decoration. Table 5 shows an icing formulation followed by its preparation procedure.

**Table 5. Icing formulation.**

| Ingredient | % |
|---|---|
| Powdered sugar | 61.67 |
| Icing shortening made with chemically IE pequi oil | 28.46 |
| Water | 9.17 |
| Salt | 0.24 |
| Vanilla | 0.41 |
| Potassium sorbate | 0.05 |

To make the icing, the shortening, sugar, vanilla, and salt were combined in a mixing bowl. Potassium sorbate was dissolved in water in a separate container. The shortening, sugar, vanilla, and salt were mixed on low for 1 minutes. During this time, half of the water/potassium sorbate mixture was added. The mixer was stopped, and the bowl was scraped. The mixing was resumed on low for 4 minutes. During the first 30 second of mixing, the remaining water/potassium sorbate mixture was added. The mixer was stopped, and the bowl was scraped. The mixing was resumed and continued until the target specific gravity of 0.8 was reached. The IE pequi oil produced a viable non-palm alternative for icing.

### Example 3. Use of chemically interesterified pequi oil in all-purpose shortening.

Based on physical and chemical properties of IE pequi oil, this fat can be used to produced non-palm all-purpose shortening. Non-palm all-purpose shortening can be used in the manufacturing of pies, pound cakes, cookies (biscuits), wafers, fillings, laminated dough, glazes, donut frying, and additional food products. Table 6 gives the formulation of a non-palm all-purpose shortening made with IE pequi oil.

**Table 6. Non-palm all purpose shortening made with IE pequi oil.**

| Ingredient | % |
|---|---|
| Fat as chemically IE pequi oil | 40.0 |
| Interesterified soybean oil | 53.0 |
| Fully Hydrogenated fat | 7.0 |

The all-purpose shortening was produced by melting the fat phase, combining the other ingredients, chilling, crystallization, mechanical working, such as kenading and packing. To chill and crystallize the all-purpose shortening, a scraped surface heat exchanger (SSHE) was used. Pin rotor machines or intermediate crystallizers were used in combination or individually to performing the mechanical working, which were employed in order to ensure homogeneity. The IE pequi oil produced a viable non-palm alternative for all-purpose shortening.

### Example 4. Use of chemically interesterified pequi oil in a flaked fat.

By combining the IE pequi oil with other fats, it is possible to create a non-palm flaked shortening. Table 7 presents a formulation of two non-palm flaked fat containing IE pequi oil.

**Table 7. Non-palm flaked fat compositions.**

| Ingredient | % | % |
|---|---|---|
| Fat as chemically IE pequi oil | 30 | 10 |
| Fully Hydrogenated fat | 70 | - |
| Interesterified soybean oil | - | 90 |

The fat was melted and the oil was mixed therewith. The flaked fat was created by distributing the melted fat mixture on a stainless steel belt or drum that was cooled by glycol. As the fat moved down the belt or over the drum, it was crystalized into a hardened form. The fat was then scrapped off the belt or drum and broken into smaller pieces called flakes. The IE pequi oil produced a viable non-palm alternative for flaked fat.

The flaked fat was used to make American style biscuit and pizza crust. Following the formulation and preparation procedure for the American style biscuit and the pizza crust are presented.

**Table 8 - American style biscuit formulation**

| Ingredient | Percentage |
|---|---|
| Pastry Flour | 44.0 |
| Baking Powder | 2.6 |
| Dextrose | 6.2 |
| Salt | 0.5 |
| Non Fat Dry Milk | 3.5 |
| Shortening | 5.7 |
| Flaked Fat | 11.4 |
| 1^{st} Water | 24.7 |
| 2^{nd} water | 1.4 |

To make the biscuits, all the dry ingredients were added into a 12 quart mixing bowl and mixed on low for 1 minute with a paddle attachment. Bowl and paddle were scraped. Fat flakes were put into the mixing bowl and mixed for 30 seconds while streaming in the first amount of water. Add second water to the bowl and mix for 30 seconds. Bowl and paddle were scraped down, Mixer was stopped and the dough was flipped in the bowl. Mix another 15 seconds on low. Dough was taken out of the mixer and placed onto a floured bench and pressed down to 1.0-1.5 inch thickness. Flour was lightly spread on top of the dough. Dough was rolled into ½ inch thickness using rods as a guide and a rolling pin. Flour was brushed off the dough and then the dough was folded into thirds. The dough was rotated 90 degrees then rolled again so that it does not exceed ½ inch. Dough was cut into 2.25 inch circles using a biscuit cutter. Biscuits were placed on half sheet pan with 2 inches between them. The dough was baked in a pre-heated oven at 375°F for 11.5 minutes. Interesterified pequi oil made viable biscuits.

**Table.9 Pizza crust formulation**

| Ingredient | Percentage |
|---|---|
| All Purpose Flour | 58.6 |
| Vital Wheat Gluten | 0.5 |
| Water | 30.33 |
| Liquid oil | 2.92 |
| Flaked fat | 4.67 |
| Granulated Sugar | 1.17 |
| Instant Yeast | 0.58 |
| Salt | 1.22 |

All ingredients were combined into a 12 quart McDuffy bowl. All ingredients were mixed on low for 2 minutes, then mixed on medium speed for 7-8 minutes until dough was well developed. Dough was rolled into a ball and allowed to rest covered for 10 minutes. Dough was divided into 250 gram portions and sheeted into 10 inch disk on a reversible sheeter. One side of the dough was docked. Dough rounds were pressed using a heated dough press for 7 seconds at 375 degrees Fahrenheit. Dough was removed from press and allowed to cool for 10 minutes and immediately frozen. The following week, the pizza dough was baked at 400°F for 12 minutes. Interesterified pequi oil made a viable pizza crust.

### Example 5. Use of chemically interesterified pequi oil in soft candy filling

**Table 10 - Soft candy filling formulation**

| Ingredient | Percentage |
|---|---|
| Fat as IE pequi oil | 40.0 |
| Sugar | 44.6 |
| Milk Powder | 15.0 |
| Soy lecithin | 0.4 |

To make a soft filling, the fat was melted to 50°C. Dry solid material was added to the mixing bowl. Gradually2/3 of melted fat was added to mixing bowl over a 10 minute mixing period. The speed was increased and the remaining fat was added and mixed for 10 minutes. The lecithin was added and the filling was mixed for 10 minutes. After mixing, the bowl was placed in an ice bath and the filling was hand mixed until it reached the desired temperature. Filling was piped into chocolate shells and stored at room temperature. A viable filling was produced.

### Example 6. Use of chemically interesterified pequi oil in chocolate spread

**Table 11 - Chocolate spread formulation**

| Ingredient | Percentage |
|---|---|
| Icing Sugar | 50.99 |
| Cocoa Powder | 8.0 |
| Fat as IE pequi oil | 22.5 |
| Nut paste | 10.0 |
| Whey powder | 4.0 |
| Skimmed milk powder | 4.0 |
| Lecithin | 0.5 |
| Flavor | 0.01 |

All powdered ingredients were blended together. Nut paste was added and all ingredients were gently mixed by hand. In a separate container, lecithin and melted fat were mixed. Melted fat/lecithin blends was added to the powdered ingredients. Product was poured into jars and allowed to cool.IE pequi oil made a viable chocolate spread.

### Example 7: Using chemically interesterified pequi oil in an ice cream coating

**Table 12- Ice cream coating formula**

| Ingredient | Percentage |
|---|---|
| Powdered Sugar | 20.0 |
| IE Pequi oil | 57.0 |
| Non fat dry milk | 4.7 |
| Chocolate liquor wafers | 18.0 |
| Lecithin | 0.3 |

All ingredients were combined in a microwave safe bowl and heated on high 20 seconds at a time until fully melted (approximately 100°F). The mixture was stirred in between heating cycles. Once thoroughly melted, mixture was mixed continuously by hand and allowed to cool for a few minutes. Previously made ice cream bars were used and were submerged into the coating. Excess coating was allowed to drip off the ice cream bars and then the bars were carefully packaged and stored in the freezer. The IE pequi oil made a viable ice cream coating.

The terms and expressions that have been employed are used as terms of description and not of limitation, and there is no intention in the use of such terms and expressions of excluding any equivalents of the features shown and described or portions thereof, but it is recognized that various modifications are possible within the scope of the aspects of the present invention.

## Claims

1. A fat composition for use in a food item, the composition comprising:
interesterified pequi oil, wherein the composition is a shortening, an all-purpose shortening, an icing shortening, a filling fat, a flaked fat, a frying fat, a pumpable shortening, a cookie shortening, a cake shortening, a pastry shortening, a pie shortening, or a combination thereof.

2. The composition of claim 1, wherein the composition is a biscuit filling, an icing shortening, an all-purpose shortening, or a flaked fat.

3. The composition of claim 1, wherein the composition is substantially free of palm oil.

4. The composition of claim 1, wherein the composition is substantially free of fully hydrogenated oils having an iodine value equal to or less than 4.

5. The composition of claim 1, further comprising non-interesterified pequi oil.

6. The composition of claim 1, wherein the composition further comprises an emulsifier, a wax, a carbohydrate, a protein, cellulose, a cellulose derivative, a food coloring, a filler, a flavoring, a plant-based oil other than interesterified pequi oil, an animal-based oil, or a combination thereof.

7. The process for preparing the composition of claim 1, wherein the interesterified pequi oil comprises interesterified non-fractionated pequi oil, interesterified pequi oil from a first fractionation, interesterified pequi oil from a second fractionation, interesterified pequi oil from more than a second fractionation, interesterified pequi oil from one or more winterization fractionations, or a combination thereof.

8. The process for preparing the composition of claim 1, wherein the interesterified pequi oil comprises chemically interesterified pequi oil.

9. The process for preparing the composition of claim 1, wherein the interesterified pequi oil comprises enzymatically interesterified pequi oil.

10. A food item comprising the composition of claim 1.

11. The food item of claim 10, wherein the food item comprises a fried food item, a bakery food item, a biscuit filling, an icing, a frosting, a confectionary item, a bonbon filling, an ice-cream coating, a chocolate or nut spreads, a margarine or spread (water in oil emulsion), or a combination thereof.

12. The food item of claim 10, wherein the food item comprises a potato chip, a French fry, a fried-chicken product, a tempura product, a biscuit, a cookie, a pie, a cake, a wafer, a filling, a dough, a glaze, a pastry, a donut, an icing, a frosting, a pizza crust, an American style biscuit, a chewing gum, a meat alternative, a dairy analog product, or a combination thereof.

## Patentansprüche

1. Fettzusammensetzung zur Verwendung in einem Nahrungsmittel, die Zusammensetzung umfassend:
umgeestertes Pequiöl, wobei die Zusammensetzung ein Backfett, ein Universalbackfett, ein Glasurbackfett, ein Füllungsfett, ein flockiges Fett, ein Frittierfett, ein pumpfähiges Backfett, ein Keksbackfett, ein Kuchenbackfett, ein Gebäckbackfett, ein Tortenbackfett oder eine Kombination davon ist.

2. Zusammensetzung nach Anspruch 1, wobei die Zusammensetzung eine Plätzchenfüllung, ein Glasurbackfett, ein Universalbackfett oder ein flockiges Fett ist.

3. Zusammensetzung nach Anspruch 1, wobei die Zusammensetzung im Wesentlichen frei von Palmöl ist.

4. Zusammensetzung nach Anspruch 1, wobei die Zusammensetzung im Wesentlichen frei von vollständig hydrierten Ölen ist, die einen Jodwert gleich oder kleiner als 4 aufweisen.

5. Zusammensetzung nach Anspruch 1, ferner umfassend nicht umgeestertes Pequiöl.

6. Zusammensetzung nach Anspruch 1, wobei die Zusammensetzung ferner einen Emulgator, ein Wachs, ein Kohlenhydrat, ein Protein, Cellulose, ein Cellulosederivat, eine Lebensmittelfarbe, einen Füllstoff, einen Aromastoff, ein anderes pflanzliches Öl als umgeestertes Pequiöl, ein tierisches Öl oder eine Kombination davon umfasst.

7. Verfahren zum Herstellen der Zusammensetzung nach Anspruch 1, wobei das umgeesterte Pequiöl umgeestertes nicht fraktioniertes Pequiöl, umgeestertes Pequiöl aus einer ersten Fraktionierung, umgeestertes Pequiöl aus einer zweiten Fraktionierung, umgeestertes Pequiöl aus mehr als einer zweiten Fraktionierung, umgeestertes Pequiöl aus einer oder mehreren Winterisierungsfraktionierungen oder eine Kombination davon umfasst.

8. Verfahren zum Herstellen der Zusammensetzung nach Anspruch 1, wobei das umgeesterte Pequiöl chemisch umgeestertes Pequiöl umfasst.

9. Verfahren zum Herstellen der Zusammensetzung nach Anspruch 1, wobei das umgeesterte Pequiöl enzymatisch umgeestertes Pequiöl umfasst.

10. Nahrungsmittel, umfassend die Zusammensetzung nach Anspruch 1.

11. Nahrungsmittel nach Anspruch 10, wobei das Nahrungsmittel ein frittiertes Nahrungsmittel, eine Backnahrungsmittel, eine Plätzchenfüllung, eine Glasur, einen Zuckerguss, eine Süßware, eine Bonbonfüllung, eine Eiscremebeschichtung, einen Schokoladen- oder Nussaufstrich, eine Margarine oder einen Aufstrich (Wasser-in-Öl-Emulsion) oder eine Kombination davon umfasst.

12. Nahrungsmittel nach Anspruch 10, wobei das Nahrungsmittel einen Kartoffelchip, eine Pommes frites, ein frittiertes Hähnchenprodukt, ein Tempuraprodukt, ein Plätzchen, einen Keks, eine Torte, einen Kuchen, eine Waffel, eine Füllung, einen Teig, einen Tortenguss, ein Gebäck, einen Donut, eine Glasur, einen Zuckerguss, eine Pizzakruste, ein Brötchen nach amerikanischer Art, einen Kaugummi, eine Fleischalternative, ein Milchanalogprodukt oder eine Kombination davon umfasst.

## Revendications

1. Composition de graisses pour utilisation dans un produit alimentaire, la composition comprenant :
de l'huile de pequi interestérifiée, dans laquelle la composition est une graisse alimentaire, une graisse alimentaire tout usage, une graisse alimentaire de glaçage, une graisse de remplissage, une graisse en flocons, une graisse de friture, une graisse alimentaire pompable, une graisse alimentaire de biscuits, une graisse alimentaire de gâteau, une graisse alimentaire de pâtisserie, une graisse alimentaire de tarte, ou une combinaison de ceux-ci.

2. Composition selon la revendication 1, dans laquelle la composition est une garniture de biscuit, une graisse alimentaire de glaçage, une graisse alimentaire tout usage ou une graisse en flocons.

3. Composition selon la revendication 1, dans laquelle la composition est sensiblement exempte d'huilde de palme.

4. Composition selon la revendication 1, dans laquelle la composition est sensiblement exempte d'huiles entièrement hydrogénées ayant un indice d'iode égal ou inférieur à 4.

5. Composition selon la revendication 1, comprenant en outre de l'huile de pequi non interestérifiée.

6. Composition selon la revendication 1, dans laquelle la composition comprend en outre un émulsifiant, une cire, un hydrate de carbone, une protéine, de la cellulose, un dérivé de cellulose, un colorant alimentaire, une charge, un arôme, une huile d'origine végétale autre que l'huile de pequi interestérifiée, une huile d'origine animale, ou une combinaison de celles-ci.

7. Procédé de préparation de la composition selon la revendication 1, dans lequel l'huile de péqui interestérifiée comprend de l'huile de péqui non fractionnée interestérifiée, de l'huile de péqui interestérifiée provenant d'un premier fractionnement, de l'huile de péqui interestérifiée provenant d'un second fractionnement, de l'huile de pequi interestérifiée provenant de plus d'un second fractionnement, de l'huile de pequi interestérifiée provenant d'un ou plusieurs fractionnements d'hivernage, ou une combinaison de celles-ci.

8. Procédé de préparation de la composition selon la revendication 1, dans lequel l'huile de péqui interestérifiée comprend de l'huile de péqui chimiquement interestérifiée.

9. Procédé de préparation de la composition selon la revendication 1, dans lequel l'huile de pequi interestérifiée comprend de l'huile de pequi interestérifiée par voie enzymatique.

10. Article alimentaire comprenant la composition selon la revendication 1.

11. Article alimentaire selon la revendication 10, dans lequel l'article alimentaire comprend un article alimentaire frit, un article alimentaire de boulangerie, une garniture de biscuit, un glaçage, un glaçage, un article de confiserie, une garniture de bonbon, un enrobage de crème glacée, une pâte à tartiner au chocolat ou aux noix, une margarine ou une pâte à tartiner (eau dans une émulsion d'huile), ou une combinaison de ceux-ci.

12. Article alimentaire selon la revendication 10, dans lequel l'article alimentaire comprend une chips, une frite, un produit de poulet frit, un produit tempura, un biscuit, un biscuit, une tarte, un gâteau, une gaufrette, une garniture, une pâte, un glaçage, une pâtisserie, un beignet, un glaçage, un glaçage, une croûte de pizza, un biscuit à l'américaine, un chewing-gum, un substitut de viande, un produit analogue de produits laitiers ou une combinaison de ceux-ci.
